# EUROPEAN PATENT APPLICATION

(11) **EP 4 400 336 A1**
(43) Date of publication of application: **17.07.2024**
(21) Application number: 24151579.0
(22) Date of filing: 12.01.2024
(51) Int. Cl.: B60C 11/14, C08L 7/00, C08L 9/00, C08K 3/04

(54) **RUBBER COMPOSITION FOR STUDDED TIRE AND STUDDED TIRE**

(30) Priority: 13.01.2023 JP 2023003624; 24.02.2023 JP 2023026948
(71) Applicant: The Yokohama Rubber Co., Ltd., Hiratsuka-shi, Kanagawa 254-8601 (JP)
(72) Inventor: Takahashi, Kenichiro, Hiratsuka, Kanagawa, 254-8601 (JP)
(74) Representative: Grünecker Patent- und Rechtsanwälte PartG mbB

(57) **Abstract**

Obj ect

In racing tires for racing on ice and snow, a tire with stud pins is used to reduce lap time. To allow a tire to track on an icy or snowy road surface, a tread rubber needs to have a certain degree of softness, but a soft tread rubber has a defect that blocks formed on the tread twist in a high-speed and high-load region, and further, that stud pins come off during continuous running.

Solving Means

The above-described problems have been solved by a rubber composition for a studded tire, the rubber composition being obtained by blending 50 parts by mass or more of carbon black per 100 parts by mass of diene rubber and subjected to sulfur vulcanization, the rubber composition containing a monosulfide bond in an amount of from 8 to 18 mass% and having a volume fraction of the carbon black of from 22 to 25%.

## Description

### Technical Field

The present invention relates to a rubber composition for a studded tire and a studded tire, and more particularly relates to a rubber composition for a studded tire capable of providing highly balanced followability on icy and snowy road surfaces, block rigidity in a high-speed and high-load region, and stud pin retention capability, and a tire using the composition.

### Background Art

In racing tires for racing on ice and snow, a tire with stud pins is used to reduce lap time. To allow a tire to track on an icy or snowy road surface, a tread rubber needs to have a certain degree of softness, but a soft tread rubber has a defect that blocks formed on the tread twist in a high-speed and high-load region, and further, that stud pins come off during continuous running. Thus, in order to shorten the lap time, it is required to highly balance followability on icy and snowy road surfaces, block rigidity in a high-speed and high-load region, and stud pin retention capability.

A studded tire that provides improved performance on ice and snow and wet performance by increasing the stud pin retention capability is disclosed in, for example, the following Patent Document 1.

### Citation List

### Patent Literature

Patent Document 1: JP 5892298 B

### Summary of Invention

### Technical Problem

An object of the present invention is to provide a rubber composition for a studded tire capable of providing highly balanced followability on icy and snowy road surfaces, block rigidity in a high-speed and high-load region, and stud pin retention capability, and a tire using the composition.

### Solution to Problem

As a result of intensive studies, the present inventors have found that the above problems can be solved by blending carbon black in a specific amount or more with respect to diene rubber, and appropriately determining the amount of the monosulfide bond after sulfur vulcanization and the volume fraction of the carbon black, and have thus completed the present invention.

That is, an embodiment of the present invention provides a rubber composition for a studded tire, the rubber composition being obtained by blending 50 parts by mass or more of carbon black per 100 parts by mass of diene rubber and subjected to sulfur vulcanization, the rubber composition containing a monosulfide bond in an amount of from 8 to 18 mass% and having a volume fraction of the carbon black of from 22 to 25%.

Further, an embodiment of the present invention provides a studded tire using the rubber composition for a studded tire for a cap tread.

### Advantageous Effects of Invention

The rubber composition for a studded tire according to an embodiment of the present invention is a rubber composition for a studded tire obtained by blending 50 parts by mass or more of carbon black per 100 parts by mass of diene rubber and subjected to sulfur vulcanization, the rubber composition containing a monosulfide bond in an amount of from 8 to 18 mass% and having a volume fraction of the carbon black of from 22 to 25%, and thus it can provide highly balanced followability on icy and snowy road surfaces, block rigidity in a high-speed and high-load region, and stud pin retention capability.

According to the present invention, the volume fraction of the carbon black in the composition is made relatively large as described above to impart an appropriate hardness to the rubber composition after sulfur vulcanization, thereby increasing block rigidity in a high-speed and high-load region. On the other hand, when the hardness of the rubber composition after sulfur vulcanization is increased, followability on icy and snowy road surfaces and stud pin retention capability usually deteriorate. However, in the present invention, since the volume fraction of the carbon black is limited to the range of from 22 to 25%, it is possible to suppress adverse effects on followability on icy and snowy road surfaces and stud pin retention capability to the maximum while increasing the hardness of the rubber composition after sulfur vulcanization. Further, since the rubber composition for a studded tire according to an embodiment of the present invention has a monosulfide bond in an amount of from 8 to 18 mass%, the temperature dependence of hardness can be suppressed, and the followability on icy and snowy road surfaces can be enhanced. Thus, according to the present invention, it is possible to provide a rubber composition for a studded tire capable of providing highly balanced followability on icy and snowy road surfaces, block rigidity in a high-speed and high-load region, and stud pin retention capability, and a tire using the composition.

### Brief Description of Drawings

FIG. 1 is a front view of a studded tire according to an embodiment of the present invention after a stud pin is inserted.
FIG. 2 is a side view illustrating an example of a stud pin constituting the studded tire according to an embodiment of the present invention.
FIG. 3 is a cross-sectional view illustrating an example of an implanting hole formed in a tread portion of the studded tire.
FIG. 4 is a cross-sectional view illustrating a state in which the stud pin of FIG. 2 is embedded in the implanting hole of FIG. 3.

### Description of Embodiments

The present invention will be described in further detail below.

### Diene Rubber

The diene rubber used in the present invention is not particularly limited, but in a preferred embodiment from the viewpoint of improving the effects of the present invention, it is preferable that the diene rubber contains natural rubber (NR) and/or synthetic isoprene rubber (IR) and butadiene rubber (BR) as essential components, and when the entire diene rubber is regarded as 100 parts by mass, the NR and/or IR account for from 50 to 80 parts by mass, and the BR accounts for from 50 to 20 parts by mass. A styrene-butadiene copolymer rubber (SBR) may also be blended. In this embodiment, it is preferable that the NR and/or IR account for from 40 to 60 parts by mass, the BR accounts for from 10 to 40 parts by mass, and the SBR accounts for from 5 to 10 parts by mass when the entire diene rubber is regarded as 100 parts by mass.

The molecular weight and the microstructure of the diene rubber are not particularly limited. The diene rubber may be terminal-modified with, for example, an amine, amide, silyl, alkoxysilyl, carboxyl, or hydroxyl group or may be epoxidized.

### Carbon Black

From the viewpoint of improving the effects of the present invention, the carbon black used in the present invention preferably has a nitrogen adsorption specific surface area (N₂SA) of from 40 to 320 m²/g, more preferably from 50 to 220 m²/g.

The nitrogen adsorption specific surface area (N₂SA) can be determined in accordance with JIS K 6217-2.

### Blending Proportion of Rubber Composition for Studded Tire

The rubber composition for a studded tire according to an embodiment of the present invention is obtained by blending 50 parts by mass or more of carbon black per 100 parts by mass of the diene rubber.

When the blended amount of the carbon black is less than 50 parts by mass per 100 parts by mass of the diene rubber, cornering performance in a high-speed and high-load region decreases.

The blended amount of the carbon black is preferably from 50 to 90 parts by mass, and more preferably from 60 to 80 parts by mass per 100 parts by mass of the diene rubber.

### Other Components

In addition to the components described above, the rubber composition according to an embodiment of the present invention may also contain various types of additives commonly added to rubber compositions, such as vulcanizing or crosslinking agents; vulcanizing or crosslinking accelerators; fillers; anti-aging agents; plasticizers; resins; and curing agents. These additives may be kneaded by a common method to form a composition and used to perform vulcanization or crosslinking. Blended amounts of these additives may be any standard blended amount in the related art, so long as the object of the present invention is not hindered.

The blended amount of sulfur as a vulcanizing agent is preferably from 0.5 to 2.0 parts by mass, and more preferably from 1.0 to 1.8 parts by mass per 100 parts by mass of the diene rubber.

The rubber composition for a studded tire according to an embodiment of the present invention has a 300% modulus of preferably 14.5 MPa or more and more preferably 14.5 to 17. 5 MPa from the viewpoint of preventing the stud pin from coming off during running and stud pin retention property. The 300% modulus is measured at a temperature of 23°C and a tensile speed of 500 mm/minute with the use of a JIS No. 3 dumbbell test piece (thickness: 2 mm), in accordance with JIS K 6251.

The rubber composition for a studded tire according to an embodiment of the present invention has a monosulfide bond after vulcanization of from 8 to 18 mass% and a volume fraction of the carbon black of from 22 to 25%.

Setting the content of the monosulfide bond to 8 mass% or more makes it possible to suppress temperature dependence of hardness and enhance followability on icy and snowy road surfaces. Setting the content of the monosulfide bond to 18 mass% or less makes it possible to enhance followability on icy and snowy road surfaces. Setting the volume fraction of the carbon black to from 22 to 25% makes it possible to increase the hardness of the rubber composition after sulfur vulcanization and maximally suppress the adverse effect on followability on icy and snowy road surfaces and stud pin retention capability.

The monosulfide bond is more preferably from 8 to 14 mass%.

The monosulfide bond can be controlled by, for example, a method of adjusting the amount of a vulcanization accelerator or a method of adjusting the vulcanization temperature to a lower temperature. Specifically, it is preferable that the ratio between the vulcanization accelerator and sulfur (vulcanization accelerator/sulfur) is in the range of from 0.4 to 2.0, and the vulcanization temperature is adjusted to the range of from 135°C to 160°C. The volume fraction of the carbon black can be controlled by adjusting the blended amount of the carbon black.

The amount of the monosulfide bond is measured by a toluene swelling method.

The toluene swelling method is a method in which a rubber composition (test piece: 7 mm × 7 mm × 1 mm) after vulcanization is treated with an agent that selectively cleaves sulfide bonds (see Table 1 below), and the polysulfide network chain density is determined from the degree of toluene swelling of an untreated sample and each treated sample by applying the Flory-Rehner equation. In the present invention, this method is performed in accordance with the method described on pages 407 to 409 of "Rubber Testing Method (edited by The Society of Rubber Science and Technology, Japan, Maruzen Publishing Co., Ltd., issued on January 30, 2006)".

Here, in Table 1, "THF/toluene (1:1)" represents a mixed solution of 90 mL of tetrahydrofuran (THF) and 90 mL of toluene, "THF/toluene (1:1) + 2-propanethiol + piperidine" represents a mixed solution of 90 mL of THF, 90 mL of toluene, 3.31 mL (0.4 mol) of 2-propanethiol, and 3.35 mL (0.4 mol) of piperidine, and "THF/toluene (1:1) + lithium aluminum hydride" represents a mixed solution of 200 mL of THF, 200 mL of toluene, and 10 g of lithium aluminum hydride.

The treatment with each reagent is performed by immersing the test piece and stirring at room temperature for 8 hours.

Thereafter, the test piece is immersed in toluene for 16 hours to determine the degree of toluene swelling.

### Table 1

**Table 1**

| Network chain density | Crosslinking form | Reagent |
|---|---|---|
| vt | -C-C-, -S-, -S-S-, -Sx- | THF/toluene (1:1) |
| vm + d | -C-C-, -S-, -S-S- | THF/toluene (1:1) + 2-propanethiol + piperidine |
| vm | -C-C-, -S- | THF/toluene (1:1) + lithium aluminum hydride |

vt: total network chain density (100%)
vm/vt × 100: monosulfide network chain density
vd (= (vm + d) - vm)/vt × 100: disulfide network chain density
vp (= vt- (vm + d))/vt × 100: polysulfide network chain density

The volume fraction of the carbon black can be determined as the ratio (A/B) of the volume A to the volume B, where A is the volume obtained by dividing the blending weight of the carbon black in the composition by the specific gravity of each raw material, and B is the volume of the composition obtained by dividing the total weight of the composition by the specific gravity of the composition.

The rubber composition for a studded tire according to an embodiment of the present invention can also be used to produce a studded tire according to a known method for producing a studded tire. The rubber composition for a studded tire according to an embodiment of the present invention is suitably used for a tread of a studded tire, in particular, a cap tread, because the composition can provide highly balanced followability on icy and snowy road surfaces, block rigidity in a high-speed and high-load region, and stud pin retention capability.

The tire according to an embodiment of the present invention is preferably a pneumatic tire that can be inflated with any gas including air and inert gas, such as nitrogen.

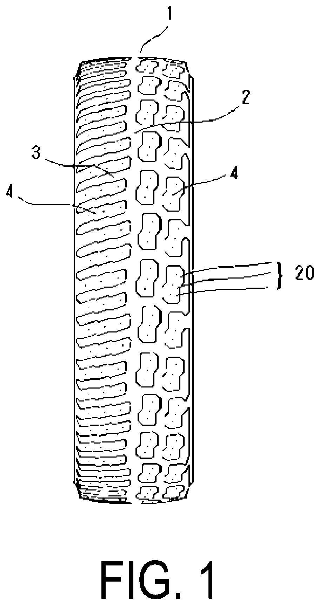

FIG. 1 is a front view of a studded tire according to an embodiment of the present invention after a stud pin is inserted.

As illustrated in FIG. 1, in a tread portion 1, a plurality of longitudinal grooves 2 formed in a tire circumferential direction and a plurality of lateral grooves 3 extending in a tire width direction are formed, and a plurality of blocks 4 are defined by the longitudinal grooves 2 and the lateral grooves 3.

A plurality of stud pins 20 are embedded in the block 4.

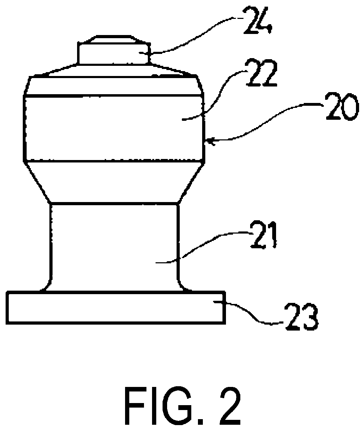

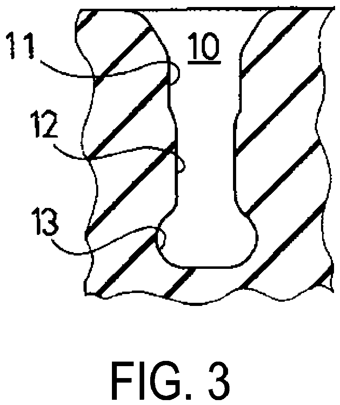

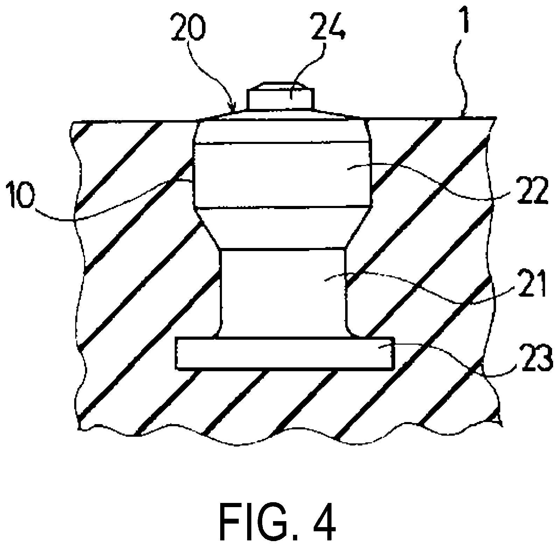

FIG. 2 is a side view illustrating a stud pin 20. FIG. 3 is a cross-sectional view illustrating an implanting hole 10 formed in the tread portion. FIG. 4 is a cross-sectional view illustrating a state in which the stud pin of FIG. 2 is embedded in the implanting hole of FIG. 3. In these illustrated examples, a double flange type stud pin is described as a stud pin, but single flange type stud pins may also be used for the studded tire according to an embodiment of the present invention.

As illustrated in FIG. 2, the stud pin 20 includes a body portion 21 having a cylindrical shape, a road contact surface side flange portion 22, a bottom side flange portion 23, and a tip portion 24. The road contact surface side flange portion 22 is formed on the road contact surface side (outer side in the tire radial direction) of the body portion 21 so that the diameter of the road contact surface side flange portion 22 is larger than that of the body portion 21. The tip portion 24 is formed from a material that is harder than the material of other constituent members so as to project in the pin axial direction from the road contact surface side flange portion 22. The bottom side flange portion 23 is formed on the bottom side (inner side in the tire radial direction) of the body portion 21 so that the diameter of the bottom side flange portion 23 is larger than that of the body portion 21.

As illustrated in FIG. 3, the implanting hole 10 includes an upper side cylindrical portion 11 disposed at a position corresponding to the road contact surface side flange portion 22 of the stud pin 20, a lower side cylindrical portion 12 disposed at a position corresponding to the body portion 21 of the stud pin 20, and a bottom portion 13 adjacent to the lower side cylindrical portion 12. Here, the inner diameters of the upper side cylindrical portion 11 and the bottom portion 13 are respectively larger than the inner diameter of the lower side cylindrical portion 12.

In the case of a single flange type stud pin, the diameter of the road contact surface side flange portion 22 may be the same as the diameter of the cylindrical body portion 21. In addition, for an implanting hole corresponding to the single flange type as well, the inner diameter of the upper side cylindrical portion 11 may be the same as the inner diameter of the lower side cylindrical portion 12.

For both double flange type and single flange type stud pins, the diameter of the bottom side flange portion 23 is made to be larger than the diameter of the cylindrical body portion 21. The inner diameter of the lower side cylindrical portion 12 is made to be smaller than the inner diameter of the bottom portion 13 of the implanting hole.

As illustrated in FIG. 4, when the stud pin 20 is implanted in the implanting hole 10 provided in the tread portion, the constricted lower side cylindrical portion 12 of the implanting hole 10 tightens the stud pin 20 so that the stud pin 20 is difficult to be removed. Since the diameter of the bottom side flange portion 23 of the stud pin 20 is made to be larger than the inner diameter of the lower side cylindrical portion 12, the stud pin 20 is even more difficult to be removed.

The ratio (D/d) of the diameter D of the bottom side flange portion 23 of the stud pin 20 to the inner diameter d of the lower side cylindrical portion 12 of the implanting hole 10 is not particularly limited but is preferably from 2.5 to 5.5 and more preferably from 3.0 to 4.0. Setting the ratio (D/d) to within such a range makes it possible to suppress the falling off of the stud pin.

### Examples

The present invention will be described in further detail by way of examples and comparative examples, but the present invention is not limited by these examples.

### Standard Example, Examples 1 to 4, and Comparative Examples 1 to 7

### Preparation of Sample

According to the composition (parts by mass) shown in Table 2, the components other than the vulcanization components (vulcanization accelerator and sulfur), were kneaded for 5 minutes in a 1.7-L sealed Banbury Mixer. The obtained mixture was then discharged from the mixer and cooled to room temperature. Thereafter, the rubber composition was obtained by placing the composition in the same Banbury Mixer again, adding the vulcanization components, and kneading. Next, the rubber composition thus obtained was subjected to press vulcanization in a predetermined mold at 150°C for 30 minutes to prepare a vulcanized rubber test piece. The physical properties of the obtained rubber composition were measured by the following test methods. The carbon black volume fraction (CB volume fraction), the amount of the monosulfide bond, and the 300% modulus (300% Mod) were measured by the methods described above.

Running stability on ice: A pneumatic tire having a tire size of 225/40R18 was produced using the rubber composition after vulcanization obtained above for a tread portion. The pneumatic tire has the shape of the tread portion 1 as illustrated in FIG. 1, and a total of 100 stud pins 20 are inserted into the blocks 4. The obtained pneumatic tire was assembled on wheels having a rim size of 17 × 8J and mounted on a Japanese 2-liter class test vehicle. The pneumatic tires were inflated to an air pressure of 240 kPa, the test vehicle was driven on a 1.2 km circuit test course having an icy road surface, and the lap time of the driving was measured. The results are expressed as index values with the lap time of Standard Example 1 being regarded as 100. The larger the index value, the shorter the lap time, and the better the running stability on ice.

High-load running stability: The lap time in a high-speed corner section on the test course was measured. The results are expressed as index values with the lap time of Standard Example 1 being regarded as 100. The larger the index value, the shorter the lap time in the high-speed corner section, and the better the high-load running stability.

Pin retention property: The test vehicle equipped with the pneumatic tires obtained as described above was driven 10,000 km on a dry road surface of the test course. Thereafter, the number of stud pins remaining in the blocks 4 was counted. The results are expressed as index values with the number of remaining stud pins in Standard Example being regarded as 100. The larger the index value, the larger the number of remaining stud pins, and the better the pin retention property.

The results are shown in Table 2. The volume A and the volume B are shown together in Table 2. The volume A is a volume obtained by dividing the blending weight of the carbon black in the composition by the specific gravity of each raw material, and the volume B is a composition volume obtained by dividing the total weight of the composition by the specific gravity of the composition. The volume fraction of carbon black is determined by the ratio of the volume A to the volume B (A/B).

**Table 2-1**

| | Standard Example | Comparative Example 1 | Comparative Example 2 | Comparative Example 3 |
|---|---|---|---|---|
| NR *1 | 80 | 80 | 80 | 50 |
| SBR *2 | - | - | - | 10 |
| BR *3 | 20 | 20 | 20 | 40 |
| Carbon black 1 *4 | 75 | 75 | 74 | 75 |
| Carbon black 2 *5 | - | - | - | - |
| Oil *6 | 2 | 2 | 2 | 2 |
| Anti-aging agent *7 | 2 | 2 | 2 | 2 |
| Zinc oxide *8 | 3 | 3 | 3 | 3 |
| Stearic acid *9 | 2 | 2 | 2 | 2 |
| Vulcanization accelerator *10 | 0.9 | 0.7 | 0.9 | 1.7 |
| Sulfur * 11 | 1.5 | 1.5 | 1.2 | 1.5 |
| Volume A | 42.2 | 42.2 | 42.2 | 42.2 |
| Volume B | 162.3 | 162.2 | 162.2 | 163.4 |
| CB volume fraction (%) | 26.00 | 26.02 | 26.02 | 25.83 |
| Monosulfide bond (mass%) | 6 | 5 | 7 | 11 |
| 300% Mod (MPa) | 13.27 | 12.30 | 12.47 | 16.01 |

| Measurement result | | | | |
|---|---|---|---|---|
| Running stability on ice | 100 | 100 | 100 | 97 |
| High-load running stability | 100 | 97 | 96 | 108 |
| Pin retention property | 100 | 90 | 93 | 110 |

**Table 2-2**

| | Comparative Example 4 | Comparative Example 5 | Comparative Example 6 | Comparative Example 7 |
|---|---|---|---|---|
| NR *1 | 80 | 80 | 80 | 80 |
| SBR *2 | - | - | - | - |
| BR *3 | 20 | 20 | 20 | 20 |
| Carbon black 1 *4 | 78 | 64 | 72 | 75 |
| Carbon black 2 *5 | - | - | - | - |
| Oil *6 | 2 | 2 | 2 | 2 |
| Anti-aging agent *7 | 2 | 2 | 2 | 2 |
| Zinc oxide *8 | 3 | 3 | 3 | 3 |
| Stearic acid *9 | 2 | 2 | 2 | 2 |
| Vulcanization accelerator *10 | 0.9 | 0.9 | 2.8 | 1.4 |
| Sulfur * 11 | 1.1 | 1.9 | 1.5 | 1.5 |
| Volume A | 43.3 | 35.2 | 39.6 | 41.4 |
| Volume B | 163.3 | 160.4 | 160.2 | 160.2 |
| CB volume fraction (%) | 26.52 | 21.95 | 24.72 | 25.84 |
| Monosulfide bond (mass%) | 5 | 4 | 18.2 | 12 |
| 300% Mod (MPa) | 13.63 | 15.60 | 18.30 | 15.40 |

| Measurement result | | | | |
|---|---|---|---|---|
| Running stability on ice | 95 | 95 | 88 | 97 |
| High-load running stability | 94 | 93 | 106 | 104 |
| Pin retention property | 100 | 104 | 106 | 106 |

**Table 2-3**

| | Example 1 | Example 2 | Example 3 | Example 4 |
|---|---|---|---|---|
| NR *1 | 80 | 80 | 50 | 80 |
| SBR *2 | - | - | 10 | - |
| BR *3 | 20 | 20 | 40 | 20 |
| Carbon black 1 *4 | 72 | 71 | 70 | - |
| Carbon black 2 *5 | - | - | - | 71 |
| Oil *6 | 2 | 2 | 2 | 2 |
| Anti-aging agent *7 | 2 | 2 | 2 | 2 |
| Zinc oxide *8 | 3 | 3 | 3 | 3 |
| Stearic acid *9 | 2 | 2 | 2 | 2 |
| Vulcanization accelerator *10 | 1.3 | 1.7 | 1.8 | 1.7 |
| Sulfur *11 | 1.6 | 1.5 | 1.5 | 1.5 |
| Volume A | 39.4 | 39.0 | 39.6 | 39.0 |
| Volume B | 160.2 | 160.2 | 163.4 | 160.2 |
| CB volume fraction (%) | 24.59 | 24.35 | 24.24 | 24.35 |
| Monosulfide bond (mass%) | 10 | 12 | 14 | 11 |
| 300% Mod (MPa) | 14.30 | 15.40 | 15.80 | 14.50 |

| Measurement result | | | | |
|---|---|---|---|---|
| Running stability on ice | 104 | 108 | 103 | 108 |
| High-load running stability | 103 | 107 | 109 | 107 |
| Pin retention property | 101 | 108 | 109 | 103 |

| | | | | |
|---|---|---|---|---|
| *1: NR (RSS#3) *2: SBR (Nipol 1502 available from Zeon Corporation) *3: BR (Nipol BR1220 available from Zeon Corporation) *4: Carbon black 1 (SEAST 9 available from Tokai Carbon Co., Ltd., nitrogen adsorption specific surface area (N₂SA) = 139 m²/g) *5: Carbon black 2 (DIABLACK GT2 available from Mitsubishi Chemical Corporation, nitrogen adsorption specific surface area (N₂SA) = 320 m²/g) *6: Oil (Diana Process Oil NH-70S, available from Idemitsu Kosan, Co., Ltd.) *7: Anti-aging agent (PILFLEX 13, available from NICOL LIMITED) *8: Zinc oxide (Zinc Oxide III, available from Seido Chemical Industry Co., Ltd.) *9: Stearic acid (Beads Stearic Acid YR, available from NOF Corporation) *10: Vulcanization accelerator (NOCCELER CZ-G, available from Ouchi Shinko Chemical Industrial Co., Ltd.) *11: Sulfur (MUCRON OT-20, available from Shikoku Chemicals Corporation) | | | | |

From the results shown in Table 2, it can be seen that the rubber composition of each Example, containing 50 parts by mass or more of carbon black per 100 parts by mass of diene rubber, having a monosulfide bond after sulfur vulcanization of from 8 to 18 mass%, and having a volume fraction of carbon black from 22 to 25 %, can provide highly balanced followability on icy and snowy road surfaces (the running stability on ice described above), block rigidity in a high-speed and high-load region (the high-load running stability described above), and stud pin retention capability (the pin retention property described above) as compared with the rubber composition of Standard Example.

On the other hand, Comparative Examples 1, 2 and 4, in which the volume fraction of carbon black exceeds the upper limit defined in the present invention and the amount of the monosulfide bond is less than the lower limit defined in the present invention, cannot provide highly balanced followability on icy and snowy road surfaces (the running stability on ice described above), block rigidity in a high-speed and high-load region (the high-load running stability described above), and stud pin retention capability (the pin retention property described above).

In Comparative Example 3, since the volume fraction of carbon black exceeded the upper limit defined in the present invention, followability on icy and snowy road surfaces (the running stability on ice described above) deteriorated.

In Comparative Example 5, since the volume fraction of the carbon black and the amount of the monosulfide bond was less than the lower limits defined in the present invention, followability on icy and snowy road surfaces (the running stability on ice described above) and block rigidity in a high-speed and high-load region (the high-load running stability described above) deteriorated.

In Comparative Example 6, since the amount of the monosulfide bond exceeded the upper limit defined in the present invention, followability on icy and snowy road surfaces (the running stability on ice described above) deteriorated.

In Comparative Example 7, since the volume fraction of carbon black exceeded the upper limit defined in the present invention, followability on icy and snowy road surfaces (the running stability on ice described above) deteriorated.

The present invention includes the following embodiments:

### First Embodiment:

A rubber composition for a studded tire, the rubber composition being obtained by blending 50 parts by mass or more of carbon black per 100 parts by mass of diene rubber and subjected to sulfur vulcanization,
the rubber composition containing a monosulfide bond in an amount of from 8 to 18 mass% and having a volume fraction of the carbon black of from 22 to 25%.

### Second Embodiment:

The rubber composition for a studded tire according to the first embodiment, wherein the diene rubber contains natural rubber and/or synthetic isoprene rubber and butadiene rubber as essential components, and when an entirety of the diene rubber is regarded as 100 parts by mass, the natural rubber and/or synthetic isoprene rubber account for from 50 to 80 parts by mass, and the butadiene rubber accounts for from 50 to 20 parts by mass.

### Third Embodiment:

The rubber composition for a studded tire according to the first or second embodiment, wherein a 300% modulus of the rubber composition for a studded tire is 14.5 MPa or more.

### Fourth Embodiment:

A studded tire using the rubber composition for a studded tire according to any one of the first to third embodiments for a cap tread.

### Reference Signs List

1 Tread portion
2 Longitudinal groove
3 Lateral groove
4 Block
10 Implanting hole
11 Upper side cylindrical portion
12 Lower side cylindrical portion
13 Bottom portion
20 Stud pin
21 Body portion
22 Road contact surface side flange portion
23 Bottom side flange portion
24 Tip portion

## Claims

1. A rubber composition for a studded tire, the rubber composition being obtained by blending 50 parts by mass or more of carbon black per 100 parts by mass of diene rubber and subjected to sulfur vulcanization,
the rubber composition containing a monosulfide bond in an amount of from 8 to 18 mass% and having a volume fraction of the carbon black of from 22 to 25%.

2. The rubber composition for a studded tire according to claim 1, wherein the diene rubber contains natural rubber and/or synthetic isoprene rubber and butadiene rubber as essential components, and when an entirety of the diene rubber is regarded as 100 parts by mass, the natural rubber and/or synthetic isoprene rubber account for from 50 to 80 parts by mass, and the butadiene rubber accounts for from 50 to 20 parts by mass.

3. The rubber composition for a studded tire according to claim 1, wherein a 300% modulus of the rubber composition for a studded tire is 14.5 MPa or more.

4. A studded tire using the rubber composition for a studded tire according to claim 1 for a cap tread.
